# EUROPÄISCHE PATENTSCHRIFT

(11) **EP 3 833 581 B1**
(45) Veröffentlichungstag und Bekanntmachung des Hinweises auf die Patenterteilung: **12.07.2023**
(21) Anmeldenummer: 19755838.0
(22) Anmeldetag: 05.08.2019
(51) Int. Cl.: B60R 21/2165, B60R 21/215

(54) **ABDECKKAPPE FÜR EIN GASSACKMODUL SOWIE GASSACKMODUL MIT EINER SOLCHEN ABDECKKAPPE**
COVERING CAP FOR AN AIRBAG MODULE AND AIRBAG MODULE HAVING A COVERING CAP OF THIS TYPE
CAPOT DE COUVERTURE POUR UN MODULE DE COUSSIN À GAZ AINSI QUE MODULE DE COUSSIN À GAZ COMPRENANT UN TEL CAPOT DE COUVERTURE

(30) Priorität: 09.08.2018 DE 202018104588 U
(43) Veröffentlichungstag der Anmeldung: 16.06.2021
(73) Patentinhaber: Dalphi Metal España, S.A., 36213 Vigo (ES)
(72) Erfinder: JONIETZ, Andreas, Joachim, Maria, 36204 Vigo (ES); BARANDELA IGLESIAS, Luis, 36205 Vigo (ES); GONZÁLEZ HORTA, Victor, José, 36208 Vigo (ES); PEREIRO COTO, Pedro, 36400 O Porrino (ES)
(74) Vertreter: ZF Patentabteilung - DIPS
(86) Internationale Anmeldenummer: PCT/EP2019/071027
(87) Internationale Veröffentlichungsnummer: WO 2020/030594

(56) Entgegenhaltungen:
- EP-A1- 1 980 454
- EP-A2- 0 899 170
- DE-A1-102004 046 866
- DE-U1-202014 002 659

## Beschreibung

Die Erfindung betrifft eine Abdeckkappe für ein Gassackmodul, insbesondere für ein Fahrergassackmodul, sowie ein Gassackmodul für ein Fahrzeuginsassen-Rückhaltesystem, mit einer solchen Abdeckkappe.

Fahrergassackmodule sind üblicherweise im Nabenbereich eines Fahrzeuglenkrads untergebracht und umfassen in der Regel eine dem Insassen zugewandte Modulabdeckung mit einem an der Modulabdeckung befestigten Emblem. Unter einem Emblem ist in diesem Zusammenhang beispielsweise ein Logo des Fahrzeugherstellers, ein Schriftzug und/oder ein sonstiges Zierelement zu verstehen, welches an der Abdeckkappe des Gassackmoduls angebracht ist.

Aus dem Stand der Technik sind zahlreiche Embleme bekannt, die auf eine dem Insassen zugewandte Außenseite der Abdeckkappe aufgesetzt und dort fest und zuverlässig fixiert sind, sodass sie sich bei einer Aktivierung des Gassackmoduls nicht von einer Frontwand der Abdeckkappe lösen.

Um bei einer Aktivierung des Gassackmoduls ein definiertes, reproduzierbares Entfaltungsverhalten des Gassacks zu erreichen, weist die Frontwand der Abdecckappe gewöhnlich eine sogenannte Reißlinie auf, d.h. eine Schwächungszone, an der die Frontwand bei einer Druckbeaufschlagung kontrolliert aufreißt. Durch diese Reißlinie werden klappenartig schwenkbare Frontwandabschnitte definiert, welche das Austreten und Entfalten des Gassacks in Richtung zum Insassen ermöglichen. Üblicherweise ist die Reißlinie ist dabei um das Emblem herumgeführt, sodass das Emblem sicher an einem der klappenartigen Frontwandabschnitt befestigt bleibt. Insbesondere bei großen Emblemen kann dies jedoch zu Formen der klappenartigen Frontwandabschnitte führen, die ein optimales Entfaltungsverhalten des Gassacks beeinträchtigen. Ferner sind Embleme bekannt, die eine Sollbruchstelle aufweisen und bei einer Aktivierung des Gassackmoduls auseinanderbrechen, wobei in diesem Fall jedoch darauf geachtet werden muss, dass keine freien Emblemfragmente entstehen.

Neben der Sicherstellung eines reduzierten Entfaltungswiderstands sowie eines definierten Entfaltungsverhaltens des Gassacks, muss die Reißlinie allerdings auch hinreichend widerstandsfähig sein, um zum Beispiel bei einer Hupenbetätigung im normalen Fahrbetrieb nicht unbeabsichtigt aufzureißen. Darüber hinaus soll die Reißlinie der Abdeckkappe für den Insassen nicht erkennbar sein.

Aus der EP 0 899 170 A2 ist eine Airbag-Abdeckung zur Verbindung mit einer Fahrzeugstruktur bekannt, wobei die Airbag-Abdeckung eine Platte mit einer Logostruktur auf der Plattenfrontseite aufweist. Die Logostruktur besteht aus mehreren miteinander verbundenen Stegelementen, von denen einige vorspringende Stifte aufweisen, welche sich zur Befestigung der Logostruktur in die Platte erstrecken.

Die DE 10 2004 046 866 A1 zeigt eine gattungsgemäße Abdeckkappe mit den Merkmalen im Oberbegriff des Anspruchs 1, wobei ein ringförmiges erstes Zierteil und ein innerhalb dieses ersten Zierteils angeordnetes, zweites Zierteil vorgesehen sind. Die Abdeckkappe weist eine Risslinie auf, die das ringförmige erste Zierteil kreuzt und sich abschnittsweise zwischen dem ersten Zierteil und dem zweiten Zierteil erstreckt.

Aufgabe der Erfindung ist es, eine mit geringem Aufwand herstellbare Abdecckappe zu schaffen, welche im normalen Fahrbetrieb hinreichend robust ist, im Auslösefall des Gassackmoduls ein definiertes Entfaltungsverhalten des Gassacks gewährleistet und darüber hinaus große Gestaltungsfreiheiten bei der Emblemkonstruktion erlaubt.

Erfindungsgemäß wird diese Aufgabe gelöst durch eine Abdeckkappe für ein Gassackmodul nach Anspruch 1. In diesem Fall muss die Reißlinie nicht um das komplette Emblem herumgeführt werden, sodass eine freiere, auf ein gewünschtes Entfaltungsverhalten des Gassacks ausgerichtete Formgebung der klappenartigen Frontwandabschnitte möglich ist. Insbesondere lassen sich auf diese Weise auch bei großen Emblemen etwa gleichgroße Klappen in der Frontwand realisieren. Ferner bricht das Emblem bei einer Aktivierung des Gassackmoduls auch nicht auseinander, sodass keine bruchbedingten, unerwünschten Emblemfragmente entstehen können. Da das Emblem keine Sollbruchstelle oder Schwächungszone aufweist, ist es im Übrigen auch robuster, sodass ein unbeabsichtigtes Auseinanderbrechen bei normalen Alltagsbeanspruchungen wie einer Hupenbetätigung weitgehend ausgeschlossen ist.

Ein Abstand zwischen den beiden Emblemelementen kann dabei weniger als 8 mm, insbesondere weniger als 5 mm betragen. Durch eine solche, nah beieinanderliegende Anordnung wirken die Emblemelemente optisch als Einheit und können auf diese Weise für ein gewünschtes Erscheinungsbild des gesamten Emblems sorgen.

Erfindungsgemäß definiert ein Bereich der Frontwand mit dem geringsten Abstand zwischen den beiden Emblemelementen einen Stegabschnitt, wobei die Reißlinie durch den Stegbereich verläuft und sich im Bereich des Stegabschnitts exzentrisch zwischen den beiden Emblemelementen erstreckt. Mit anderen Worten ist die Reißlinie zwischen den beiden Emblemelementen nicht mittig angeordnet, sondern weist unterschiedliche Abstände zu den Emblemelementen auf. Im Bereich des Emblems, das bevorzugt zentral auf der Abdeckkappe angeordnet ist, wird die Abdeckkappe beispielsweise durch Emblemöffnungen, Ausnehmungen und/oder die Reißlinie geschwächt und gleichzeitig durch die Montage der Emblemelemente lokal versteift. Dadurch ergibt sich im normalen Fahrbetrieb, beispielsweise beim Niederdrücken der Abdeckkappe zur Betätigung einer Fahrzeughupe, im zentralen Bereich des Stegabschnitts etwa mittig zwischen den Emblemelementen die maximale Beanspruchung der Abdeckkappe. Eine Verlagerung der Reißlinie aus diesem mittigen Bereich heraus in Richtung zu einem Abdeckkappenbereich, der durch ein Emblemelement versteift ist, verhindert daher zuverlässig ein unbeabsichtigtes Aufreißen der Frontwand.

Gemäß der Erfindung grenzt die Reißlinie im Bereich des Stegabschnitts unmittelbar an den Rand eines der Emblemelemente an oder ist im Bereich des Stegabschnitts auf der Außenseite der Frontwand sogar zumindest teilweise von einem der Emblemelemente überdeckt. Der mittig zwischen den Emblemelementen verlaufende, hochbeanspruchte Bereich der Abdeckkappe wird folglich nicht durch die Reißlinie geschwächt. Stattdessen erstreckt sich die Reißlinie in einem versteiften Bereich der Abdeckkappe, der unmittelbar an eines der Emblemelemente angrenzt oder sogar von diesem überdeckt ist.

Alternativ oder zusätzlich weist die Frontwand im Bereich der Reißlinie eine Wandschwächung sowie eine verbleibende Restwandstärke auf, wobei die Frontwand im Bereich des Stegabschnitts eine Restwandstärke aufweist, die größer ist als eine Restwand stärke außerhalb des Stegabschnitts. Im normalen Fahrbetrieb des Kraftfahrzeugs ist die Abdeckkappe, wie bereits oben erwähnt, im Bereich des zumeist zentral gelegenen und vergleichsweise kurzen Stegabschnitts besonders hoch beansprucht, beispielsweise bei einer Betätigung der Fahrzeughupe. Durch die größere Restwandstärke im Bereich des Stegabschnitts wird auf einfache Art und Weise ein unbeabsichtigtes Aufreißen der Frontwand im normalen Fahrbetrieb zuverlässig verhindert, ohne den Entfaltungswiderstand der Abdeckkappe bei einer Aktivierung des Gassackmoduls übermäßig zu erhöhen.

Gemäß einer weiteren Ausführungsform der Abdeckkappe ist die Reißlinie durch eine an der Innenseite der Frontwand vorgesehene Wandvertiefung gebildet, insbesondere durch eine lineare, muldenförmige Wandvertiefung oder Einkerbung. Auf diese Weise ist die Reißlinie für einen Fahrzeuginsassen nicht erkennbar.

Die Emblemelemente sind bevorzugt außenseitig auf die Frontwand aufgesetzt und an der Frontwand verankert. Hierzu können an den Emblemelementen frontwandseitig Zapfen vorgesehen sein, welche bevorzugt einstückig an die Emblemelemente angeformt sind. Die Zapfen sind beispielsweise Schmelzzapfen, welche in zugeordnete Öffnungen der Frontwand eingreifen sowie anschließend erwärmt und verformt werden. Alternativ sind auch Rastzapfen denkbar, welche in den Frontwandöffnungen verrasten.

Die Erfindung betrifft im Übrigen auch ein Gassackmodul für ein Fahrzeuginsassen-Rückhaltesystem, mit einem Modulgehäuse, das eine oben beschriebene Abdeckkappe umfasst, einem Gassack, der bei deaktiviertem Gassackmodul als gefaltetes Gassackpaket im Modulgehäuse aufgenommen ist, und einem Gasgenerator zum Aufblasen des Gassacks bei einer Aktivierung des Gassackmoduls.

Weitere Merkmale und Vorteile der Erfindung ergeben sich aus der nachfolgenden Beschreibung einer bevorzugten Ausführungsform unter Bezugnahme auf die Zeichnungen. In diesen zeigen:
- Figur 1 eine perspektivische Explosionsansicht einer erfindungsgemäßen Abdeckkappe mit zweiteiligem Emblem;
- Figur 2 eine Ansicht einer Innenseite der Abdeckkappe gemäß Figur 1 vor einer Montage des Emblems;
- Figur 3 eine Ansicht einer Außenseite der Abdeckkappe gemäß Figur 1 nach einer Montage des Emblems;
- Figur 4 ein Schnittdetail der Abdeckkappe gemäß Figur 3 in einem Bereich zwischen den beiden Emblemelementen des Emblems;
- Figur 5 eine Ansicht einer Innenseite der Abdeckkappe gemäß Figur 1 nach einer Montage des Emblems sowie mehrere Schnittdetails der Abdeckkappe; und
- Figur 6 einen schematischen Schnitt durch ein erfindungsgemäßes Gassackmodul mit einer erfindungsgemäßen Abdeckkappe.

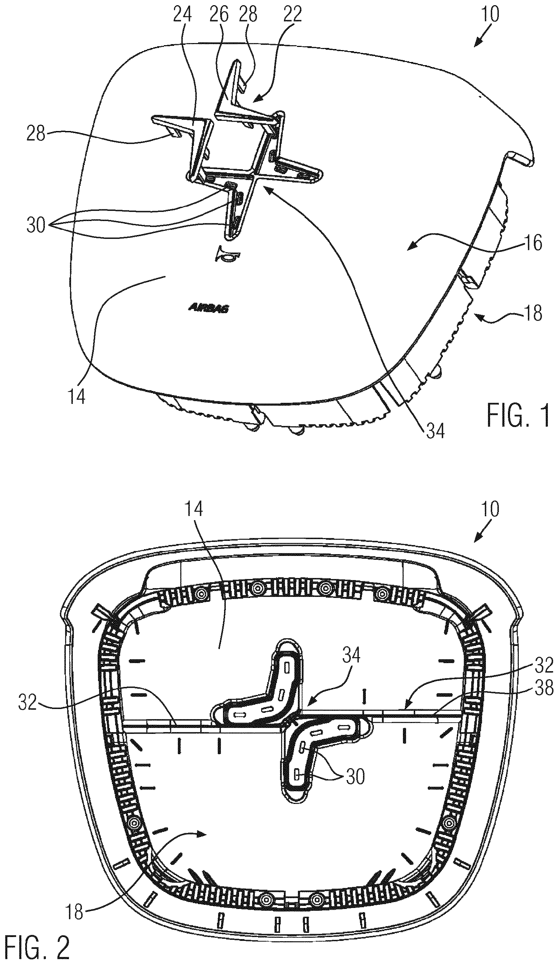

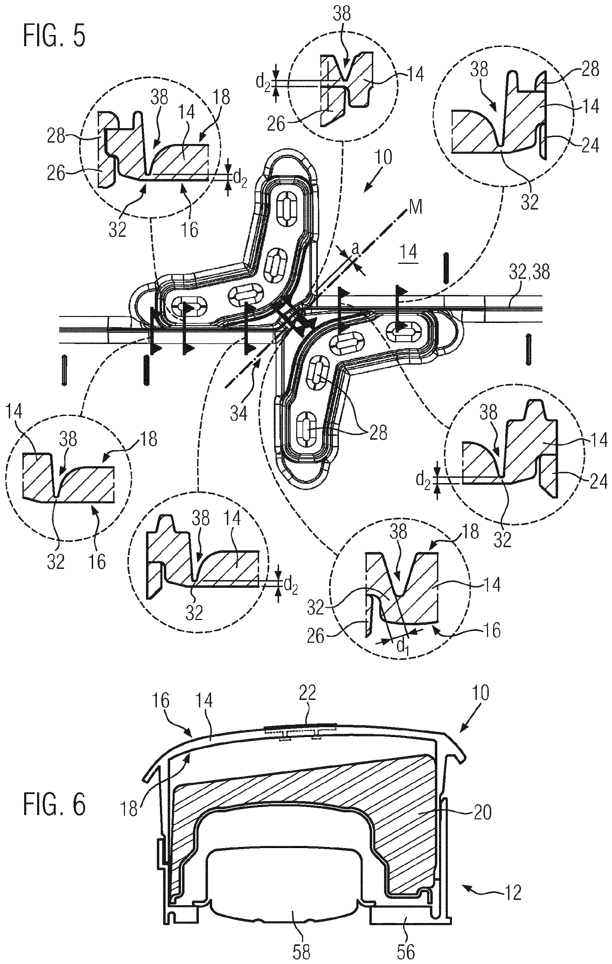

Die Figuren 1 bis 5 zeigen eine Abdeckkappe 10 eines in Figur 6 schematisch dargestellten Gassackmoduls 12, mit einer Frontwand 14 umfassend eine Außenseite 16 sowie eine entgegengesetzte, im zusammengesetzten Zustand des Gassackmoduls 12 einem gefalteten Gassack 20 zugewandte Innenseite 18, und mit einem Emblem 22 umfassend zwei an der Frontwand 14 befestigte, separate Emblemelemente 24, 26.

Die Emblemelemente 24, 26 sind außenseitig auf die Frontwand 14 aufgesetzt und an der Frontwand 14 verankert. Gemäß Figur 1 sind hierzu an den Emblemelementen 24, 26 frontwandseitig mehrere Zapfen 28 vorgesehen, insbesondere angeformt. Diese Zapfen 28 sind im dargestellten Ausführungsbeispiel Schmelzzapfen, welche bei der Montage des Emblems 22 in zugeordnete Öffnungen 30 der Frontwand 14 eingreifen und dann unter Zufuhr von Wärmeenergie plastisch verformt werden. Durch die plastische Verformung werden die Schmelzzapfen an ihren freien Enden aufgeweitet und überlappen die Ränder der Frontwandöffnungen 30 (vgl. Figur 5), sodass das Emblem 22 schließlich fest und zuverlässig an der Frontwand 14 fixiert ist.

Anhand der Innenansicht der Abdeckkappe 10 gemäß Figur 2 ist gut zu erkennen, dass die Frontwand 14 eine Reißlinie 32 aufweist, an der die Abdeckkappe 10 bei einer Aktivierung des zusammengebauten Gassackmoduls 12 aufreißt, wobei sich die Reißlinie 32 zwischen den beiden separaten Emblemelementen 24, 26 des Emblems 22 erstreckt.

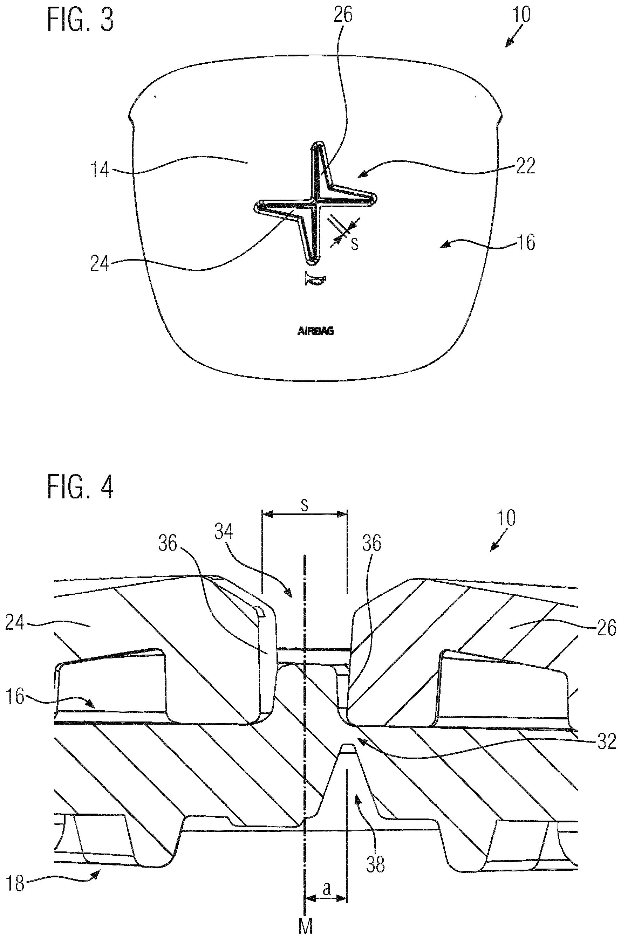

Die Figur 3 zeigt eine Außenansicht der Abdeckkappe 10, konkret eine Draufsicht auf die Außenseite 16 der Frontwand 14 und das an der Frontwand 14 befestigte Emblem 22. Hierbei wird deutlich, dass die beiden Emblemelemente 24, 26 des Emblems 22 sehr nah beieinanderliegen. Ein Abstand s zwischen den beiden Emblemelementen 24, 26 beträgt in diesem Fall weniger als 8 mm, insbesondere weniger als 5 mm.

Ein Bereich der Frontwand 14 mit dem geringsten Abstand s zwischen den beiden Emblemelementen 24, 26 definiert einen Stegabschnitt 34, wobei die Figur 4 ein Schnittdetail der Abdeckkappe 10 im Bereich dieses Stegabschnitts 34 veranschaulicht. In Figur 4 ist auch eine Mittelachse M zwischen den Emblemelementen 24, 26 eingezeichnet, wobei die Mittelachse M hier auch einer Symmetrieachse des Emblems 22 entspricht.

Die Reißlinie 32 erstreckt sich im Bereich des Stegabschnitts 34 exzentrisch zwischen den beiden Emblemelementen 24, 26, weist also eine Ausmitte a und damit unterschiedliche Abstände zu den beiden Emblemelementen 24, 26 auf.

Gemäß Figur 4 ist die Reißlinie 32 durch eine an der Innenseite 18 der Frontwand 14 vorgesehene, lineare Wandvertiefung 38 gebildet und grenzt im Bereich des Stegabschnitts 34 unmittelbar an den Rand 36 eines der Emblemelemente 24, 26 an. Insbesondere kann die Reißlinie 32 im Bereich des Stegabschnitts 34 auf der Außenseite 16 der Frontwand 14 sogar zumindest teilweise von diesem Emblemelement 26 überdeckt sein.

Die Figur 5 zeigt eine Detailansicht der Abdeckkappen-Innenseite 18 im Bereich des an der Frontwand 14 montierten Emblems 22 sowie mehrere Schnittdetails der Abdeckkappe 10 an unterschiedlichen Stellen der Reißlinie 32.

Die Reißlinie 32 erstreckt sich quer über einen zentralen Bereich der Frontwand 14, insbesondere auch durch den Stegabschnitt 34 zwischen den beiden Emblemelementen 24, 26, wobei die Frontwand 14 im Bereich der Reißlinie 32 eine Wandschwächung sowie eine verbleibende Restwandstärke d₁, d₂ aufweist. Anhand der Schnittdetails in Figur 5 wird deutlich, dass die Frontwand 14 im Bereich des Stegabschnitts 34 eine Restwandstärke d₁ aufweist, die größer ist als eine Restwandstärke d₂ außerhalb des Stegabschnitts 34. Die größere Restwandstärke d₁ kann insbesondere nur in einem Teilbereich des Stegabschnitts 34 vorgesehen sein und muss sich nicht über dessen gesamte Länge erstrecken. In Bereichen der Reißlinie 32, welche beispielsweise durch eine Hupenbetätigung relativ hoch beansprucht werden, sorgt die größere Restwandstärke d₁ örtlich begrenzt für eine Verstärkung der Frontwand 14, sodass ein unbeabsichtigtes Aufreißen der Abdeckkappe 10 im normalen Fahrbetrieb weitgehend ausgeschlossen werden kann.

Die Figur 6 zeigt schließlich einen schematischen Schnitt des Gassackmoduls 12 für ein Fahrzeuginsassen-Rückhaltesystem, mit einem Modulgehäuse 40, das eine oben beschriebene Abdeckkappe 10 umfasst, einem Gassack 20, der bei deaktiviertem Gassackmodul 12 als gefaltetes Gassackpaket im Modulgehäuse 40 aufgenommen ist, und einem Gasgenerator 42 zum Aufblasen des Gassacks 20 bei einer Aktivierung des Gassackmoduls 12.

Das dargestellte Gassackmodul 12 ist hier als Fahrergassackmodul ausgeführt und nach seiner Montage im Nabenbereich eines Fahrzeuglenkrads angeordnet.

## Patentansprüche

1. Abdeckkappe für ein Gassackmodul (12), insbesondere für ein Fahrergassackmodul, mit
einer Frontwand (14), umfassend eine Außenseite (16) sowie eine entgegengesetzte Innenseite (18), welche im zusammengesetzten Zustand des Gassackmoduls (12) einem gefalteten Gassack (20) zugewandt ist, und
einem Emblem (22), umfassend zwei an der Frontwand (14) befestigte, separate Emblemelemente (24, 26),
wobei die Frontwand (14) eine Reißlinie (32) aufweist, an der die Abdeckkappe (10) bei einer Aktivierung des zusammengebauten Gassackmoduls (12) aufreißt,
wobei ein Bereich der Frontwand (14) mit dem geringsten Abstand zwischen den beiden Emblemelementen (24, 26) einen Stegabschnitt (34) definiert, durch den sich die Reißlinie (32) erstreckt, und
wobei sich die Reißlinie (32) im Bereich des Stegabschnitts (34) exzentrisch zwischen den beiden separaten Emblemelementen (24, 26) hindurch erstreckt, **dadurch gekennzeichnet,**
**dass** die Reißlinie (32) im Bereich des Stegabschnitts (34) unmittelbar an den Rand (36) eines der Emblemelemente (24, 26) angrenzt oder auf der Außenseite (16) der Frontwand (14) zumindest teilweise von einem der Emblemelemente (24, 26) überdeckt ist, und/oder
**dass** die Frontwand (14) im Bereich der Reißlinie (32) eine Wandschwächung sowie eine verbleibende Restwandstärke (d₁, d₂) aufweist, wobei die Frontwand (14) im Bereich des Stegabschnitts (34) eine Restwandstärke (d₁) aufweist, die größer ist als eine Restwandstärke (d₂) außerhalb des Stegabschnitts (34).

2. Abdeckkappe nach Anspruch 1, **dadurch gekennzeichnet, dass** ein Abstand (s) zwischen den beiden Emblemelementen (24, 26) weniger als 8 mm, insbesondere weniger als 5 mm beträgt.

3. Abdeckkappe nach einem der vorhergehenden Ansprüche, **dadurch gekennzeichnet, dass** die Reißlinie (32) durch eine an der Innenseite (18) der Frontwand (14) vorgesehene Wandvertiefung (38) gebildet ist.

4. Abdeckkappe nach einem der vorhergehenden Ansprüche, **dadurch gekennzeichnet, dass** die Emblemelemente (24, 26) außenseitig auf die Frontwand (14) aufgesetzt und an der Frontwand (14) verankert sind.

5. Gassackmodul für ein Fahrzeuginsassen-Rückhaltesystem, mit
einem Modulgehäuse (40), das eine Abdeckkappe (10) nach einem der vorhergehenden Ansprüche umfasst,
einem Gassack (20), der bei deaktiviertem Gassackmodul (12) als gefaltetes Gassackpaket im Modulgehäuse (40) aufgenommen ist, und
einem Gasgenerator (42) zum Aufblasen des Gassacks (20) bei einer Aktivierung des Gassackmoduls (12).

## Claims

1. A cover cap for an airbag module (12), especially for a driver airbag module, comprising
a front panel (14) including an outer face (16) as well as an opposed inner face (18) which in the assembled state of the airbag module (12) faces a folded airbag (20), and
an emblem (22) including two separate emblem elements (24, 26) fastened to the front panel (14),
wherein the front panel (14) has a tear line (32) along which the cover cap (10) tears upon activation of the assembled airbag module (12),
wherein an area of the front panel (14) having the smallest distance between the two emblem elements (24, 26) defines a web portion (34) through which the tear-line (32) extends, and
wherein the tear line (32) in the area of the web portion (34) extends eccentrically between the two separate emblem elements (24, 26), **characterized**
**in that**
in the area of the web portion (34) the tear line (32) is either directly adjacent to the edge (36) of either of the web elements (24, 26) or covered at least partially by either of the emblem elements (24, 26) on the outer face (16) of the front panel (14), and/or
**in that** the front panel (14) has a weakened panel as well as a remaining residual panel thickness (d₁, d₂) in the area of the tear line (32), wherein the front panel (14) in the area of the web portion (34) has a residual panel thickness (d₁) larger than a residual wall thickness (d₂) outside the web portion (34).

2. The cover cap according to claim 1, **characterized in that** a distance (s) between the two emblem elements (24, 26) amounts to less than 8 mm, especially to less than 5 mm.

3. The cover cap according to any one of the preceding claims, **characterized in that** the tear line (32) is formed by a panel recess (38) provided at the inner face (18) of the front panel (14).

4. The cover cap according to any one of the preceding claims, **characterized in that** the emblem elements (24, 26) are attached to the outside of the front panel (14) and are anchored to the front panel (14).

5. An airbag module for a vehicle occupant restraint system, comprising
a module housing (40) which includes a cover cap (10) according to any one of the preceding claims,
an airbag (20) which is accommodated in the module housing (40) as a folded airbag package when the airbag module (12) is deactivated, and
an inflator (42) for inflating the airbag (20) upon activation of the airbag module (12).

## Revendications

1. Couvercle pour un module airbag (12), en particulier pour un module airbag conducteur, avec
une paroi frontale (14) comprenant un côté extérieur (16) ainsi qu'un côté intérieur (18) opposé qui, à l'état assemblé du module airbag (12), est tourné vers un coussin gonflable (20) plié, et
un emblème (22), comprenant deux éléments d'emblème (24, 26) séparés, fixés sur la paroi frontale (14),
pour lequel la paroi frontale (14) présente une ligne de déchirure (32) au niveau de laquelle le couvercle (10) se déchire lors d'une activation du module airbag (12) assemblé,
pour lequel une zone de la paroi frontale (14) présente la distance la plus faible entre les deux éléments d'emblème (24, 26) définissant une section nervurée (34) à travers laquelle s'étend la ligne de déchirure (32), et
pour lequel la ligne de déchirure (32) s'étend de manière excentrée dans la zone de la section nervurée (34) entre les deux éléments d'emblème séparés (24, 26), **caractérisé en ce que**
**en ce que** la ligne de déchirure (32), dans la zone de la section nervurée (34), est directement adjacente au bord (36) de l'un des éléments d'emblème (24, 26) ou est recouverte au moins partiellement par l'un des éléments d'emblème (24, 26) sur le côté extérieur (16) de la paroi frontale (14), et/ou
**en ce que** la paroi frontale (14) présente, dans la zone de la ligne de déchirure (32), un affaiblissement de la paroi ainsi qu'une épaisseur de paroi résiduelle (d₁, d₂) restante, pour lequel la paroi frontale (14) présente, dans la zone de la section nervurée (34), une épaisseur de paroi résiduelle (d₁) qui est supérieure à une épaisseur de paroi résiduelle (d₂) en dehors de la section nervurée (34).

2. Couvercle selon la revendication 1, **caractérisé en ce qu'**une distance (s) entre les deux éléments d'emblème (24, 26) est inférieure à 8 mm, en particulier inférieure à 5 mm.

3. Couvercle selon l'une des revendications précédentes, **caractérisé en ce que** la ligne de déchirure (32) est formée par un renfoncement de paroi (38) prévu sur le côté intérieur (18) de la paroi avant (14).

4. Couvercle selon l'une des revendications précédentes, **caractérisé en ce que** les éléments d'emblème (24, 26) sont placés sur le côté extérieur de la paroi frontale (14) et sont ancrés sur la paroi frontale (14).

5. Module airbag pour un système de retenue des occupants d'un véhicule, comprenant
un boitier de module (40), qui comprend un couvercle (10) selon l'une des revendications précédentes,
un coussin gonflable (20) qui, lorsque le module airbag (12) est désactivé, est logé dans le boîtier de module (40) sous la forme d'un paquet de coussin gonflable plié, et
un générateur de gaz (42) pour gonfler le sac gonflable (20) lors d'une activation du module airbag (12).
